# EUROPÄISCHE PATENTSCHRIFT

(11) **EP 2 208 692 B1**
(45) Veröffentlichungstag und Bekanntmachung des Hinweises auf die Patenterteilung: **10.04.2013**
(21) Anmeldenummer: 10000177.5
(22) Anmeldetag: 11.01.2010
(51) Int. Cl.: B65G 15/00, B65G 21/06

(54) **Verpackungsmaschine mit einem Transportband**
Packaging machine with a transport band
Machine d'emballage dotée d'une bande de transport

(30) Priorität: 14.01.2009 DE 102009004558
(43) Veröffentlichungstag der Anmeldung: 21.07.2010
(73) Patentinhaber: MULTIVAC Sepp Haggenmüller GmbH & Co KG, 87787 Wolfertschwenden (DE)
(72) Erfinder: Negele, Wolfgang, 87724 Ottobeuren (DE)
(74) Vertreter: Grünecker, Kinkeldey, Stockmair & Schwanhäusser

(56) Entgegenhaltungen:
- DE-A1- 4 142 873
- FR-A1- 2 821 833
- GB-A- 2 241 682

## Beschreibung

Verpackungsmaschine mit einem Transportband

Die vorliegende Erfindung bezieht sich auf eine Verpackungsmaschine mit einem Transportband gemäß dem Oberbegriff des Anspruchs 1.

Eine Verpackungsmaschine, die aus dem Stand der Technik z.B. unter der Bezeichnung Ishida QX 1100 bekannt ist, hat ein Transportband, wobei das Transportband einen Transportgurt, einen Bandkörper, um den der Transportgurt gewickelt ist, eine Antriebsvorrichtung, die den Transportgurt um den Bandkörper umlaufend antreibt, und einen Rahmen aufweist, an dem eine Achse beidseitig gestützt ist. Der Bandkörper ist durch die Achse drehbar am Rahmen gestützt. Wenn der Transportgurt zu Reinigungszwecken oder zum Austausch aus der Verpackungsmaschine ausgebaut werden soll, wird der Bandkörper um die Achse gedreht und schräg gestellt, damit der Transportgurt von der Antriebsvorrichtung außer Eingriff gelangt und entspannt wird. Daraufhin wird der Bandkörper von der Achse demontiert, und der Transportgurt kann von dem freiliegenden Bandkörper abgezogen werden.

Nachteilig hierbei ist, dass der Bandkörper dann am Boden oder auf Tischen beiseite gelegt werden muss und somit auch der Gefahr von unbeabsichtigter Beschädigung unterliegt. Beim Herausnehmen des Bandkörpers aus der Verpackungsmaschine kann es zusätzlich zu Kollisionen z. B. mit dem Maschinenrahmen und somit zu Beschädigungen führen. Zu berücksichtigen sind auch das relativ hohe Gewicht des Bandkörpers insbesondere bei größeren Verpackungsmaschinen, die Handhabung des sperrigen Bandkörpers und die Bereitstellung einer notwendigen Ablagemöglichkeit des Bandkörpers während einer Maschinenreinigung. Je nach Maschine können mindestens drei Transportbänder vorhanden sein.

Aus der DE 41 42 873 A1 ist eine Verpackungsmaschine mit einem Transportband gemäß dem Oberbegriff des Anspruchs 1 bekannt. Ferner sind aus der FR 2 821 833 A1 und GB 2 241 682 A Bandfördereinrichtungen bekannt, bei denen ein endloses Förderband wechselbar ist.

Es ist die Aufgabe der vorliegenden Erfindung, eine Verpackungsmaschine und ein Verfahren zum Demontieren eines Transportgurts des Transportbands vorzusehen, die eine leichtere Reinigung des Transportbands ermöglichen, wobei das Transportband auch zweispurig mit zwei Transportgurten ausgeführt sein kann.

Diese Aufgabe wird durch die Verpackungsmaschine mit den Merkmalen des Anspruchs 1 gelöst. Vorteilhafte Weiterbildungen sind Gegenstand der Unteransprüche.

Bei der erfindungsgemäßen Lösung ist der Transportgurt von dem Bandkörper abziehbar, auch wenn der Bandkörper durch die Achse gestützt wird. Dadurch muss der Benutzer den relativ schweren Bandkörper nicht demontieren, um den Transportgurt zu entnehmen.

Weitere Merkmale und Zweckmäßigkeiten der Erfindung ergeben sich aus der Beschreibung von Ausführungsbeispielen anhand der beigefügten Zeichnungen.
- Fig. 1: eine Schalenverschließmaschine als Beispiel einer Verpackungsmaschine;
- Fig. 2: eine perspektivische Explosionsansicht des Transportbands gemäß einem Ausführungsbeispiel der Erfindung;
- Fig. 3: Seitenansichten des Transportbands in der Betriebsposition und in der Rüstposition gemäß dem Ausführungsbeispiel der Erfindung; und
- Fig. 4: eine Draufsicht eines zweispurigen Transportbands gemäß einem anderen Ausführungsbeispiel der Erfindung.

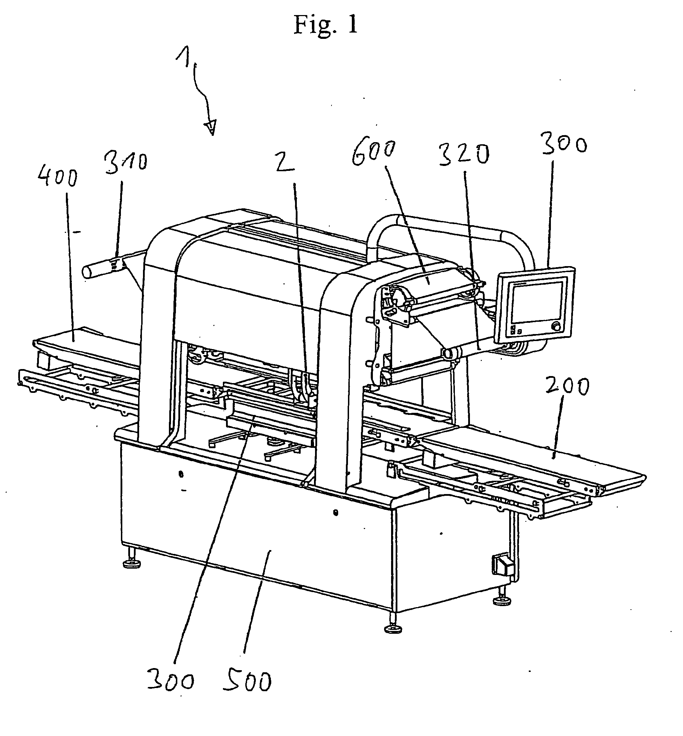

Ein Ausführungsbeispiel einer Verpackungsmaschine gemäß der Erfindung wird anhand einer Schalenverschließmaschine (Traysealer) unter Bezugnahme auf die Fig. 1 beschrieben, wobei die Verpackungsmaschine selbstverständlich auch in einer anderen Bauart wie zum Beispiel als Tiefziehmaschine oder Kammerbandmaschine ausgeführt sein kann.

Die Fig. 1 zeigt die Schalenverschließmaschine mit einem Gehäuse 500, einem Zuführband 200, einer oder mehreren Arbeitsstationen 21 wie zum Beispiel einer Evakuier-, Siegel-, und Schneidstation, einem Abführband 400, einer Folienspannvorrichtung 320, einer Bedienvorrichtung 300, einer Folienzuführrolle 600 und einem Folienrestaufwickler 310.

Auf dem Zuführband 200 und dem Abführband 400 werden Verpackungsschalen (nicht gezeigt) in die Arbeitsstation 21 hinein bzw. aus ihr heraus transportiert. Eine Oberfolie wird der Arbeitsstation 21 durch die Folienzuführrolle 600 zugeführt und durch die Folienspannvorrichtung 320 gespannt. In der Arbeitsstation 21 wird die Verpackungsschale mit der Oberfolie versiegelt. Das Innere der Verpackungen kann zusätzlich evakuiert und begast werden. Die Oberfolie kann in der Arbeitsstation 21 auch zugeschnitten werden. Der entstandene Folienrest wird hinter der Arbeitsstation 21 auf den Folienrestaufwickler 310 aufgewickelt.

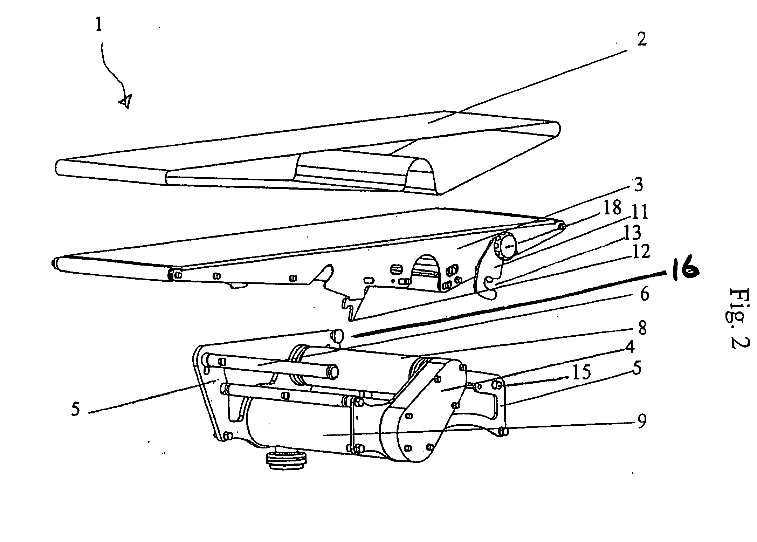

Die Figuren 2 bis 3 zeigen eine perspektivische Explosionsansicht und Seitenansichten des Transportbands 1 in der Betriebsposition und in der Rüstposition gemäß einem Ausführungsbeispiel der Erfindung. Das Transportband 1 gemäß den Figuren 2 bis 3 kann in die Verpackungsmaschine gemäß der Fig. 1 anstelle des Zuführbands 200 und des Abführbands 400 eingebaut werden.

Das Transportband 1 hat einen Transportgurt 2, einen Bandkörper 3, um den der Transportgurt 2 gewickelt ist, eine Antriebsvorrichtung 4, die den Transportgurt 2 um den Bandkörper 3 umlaufend antreibt, und einen Rahmen 5, an dem eine Achse 6 gestützt ist. Die Achse 6 verläuft quer zur Laufrichtung des Transportgurts 2 und ist einseitig an dem Rahmen 5 gestützt. Der Bandkörper 3 ist um die Achse 6 so drehbar, dass der Transportgurt 2 von dem Bandkörper 3 abziehbar ist, ohne dass der Bandkörper 3 von dem Rahmen 5 demontiert werden muss.

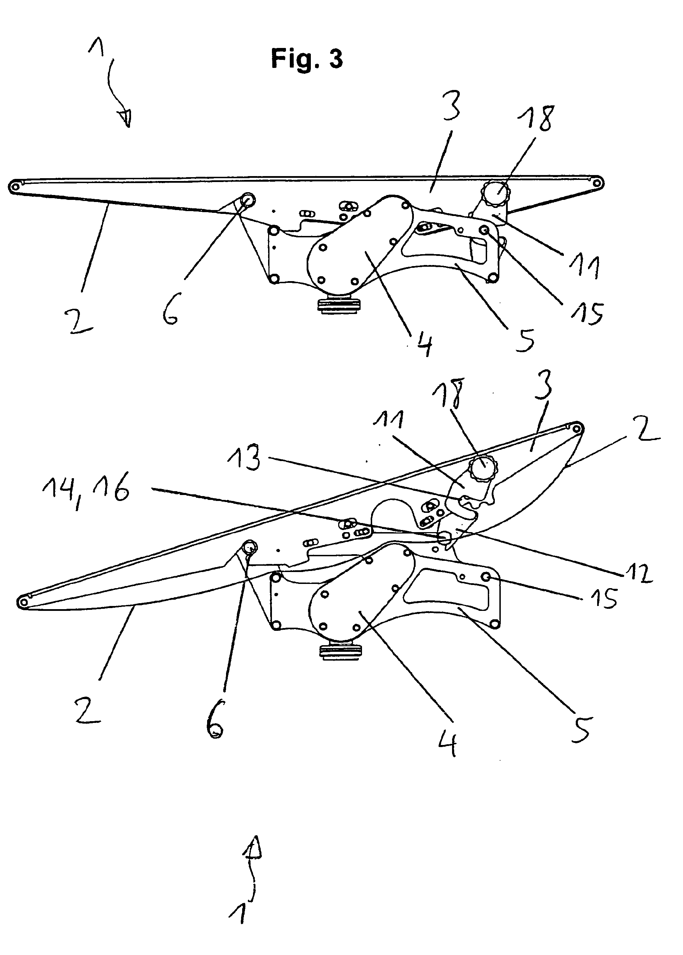

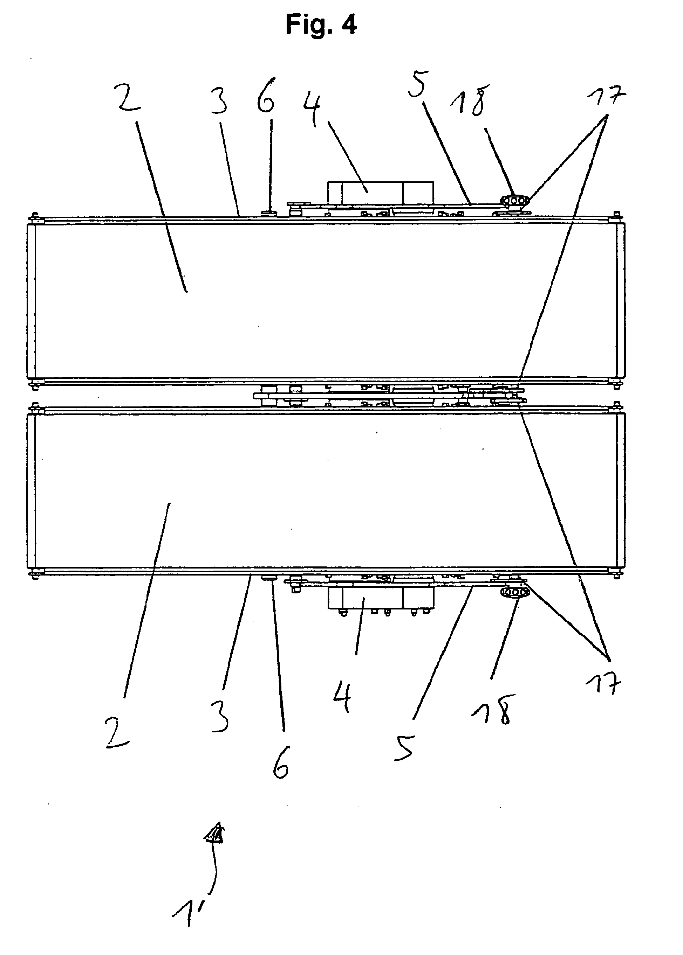

Das Transportband 1 hat des Weiteren eine Verriegelungsvorrichtung 11, 13, 15, die den Bandkörper 3 an einer ersten Position, d. h.in einer Betriebsposition, bezüglich des Rahmens 5 verriegelt. Die erste Position ist im oberen Teil der Fig. 3 dargestellt. Die Verriegelungsvorrichtung 11, 13, 15 hat an beiden seitlichen Flächen des Rahmens 5 jeweils einen ersten Hebel 11, die an einem ihrer Enden an eine am Rahmen 5 drehbar gestützte Welle 17 (vgl. Fig. 4) angebracht sind. Die Welle 17 ist an einer Seite mit einer Handhabe 18 verbunden. Der Benutzer kann die Handhabe 18 drehen, sodass sich auch die Welle 17 mit den daran angebrachten ersten Hebeln 11 dreht. Die ersten Hebel 11 haben jeweils am anderen Ende eine erste Eingriffsvorrichtung 13, die mit einem entsprechenden ersten Verriegelungsteil 15 am Rahmen 5 in Eingriff gelangt. Die erste Eingriffsvorrichtung 13 im dargestellten Ausführungsbeispiel hat die Gestalt einer Klaue, und der erste Verriegelungsteil 15 hat die Gestalt eines mit der Klaue korrespondierenden Vorsprungs, der von einer inneren, seitlichen Fläche des Rahmens 5 vorsteht. In der ersten Position bildet der Bandkörper 3 eine oben angeordnete ebene Fläche, die durch zwei parallele Seiten begrenzt ist, an denen der Transportgurt 2 umgelenkt wird. Die Achse 6 und die Antriebsvorrichtung 4 sind dabei unter der Fläche angeordnet.

Das Transportband 1 hat des Weiteren eine Abstützvorrichtung 12, 14, 16, über die sich der Bandkörper 3 in einer zweiten Position am Rahmen 5 abstützt. Die zweite Position wird von der ersten Position durch Drehen des Bandkörpers 3 im Gegenuhrzeigersinn erreicht. Die zweite Position ist im unteren Teil der Fig. 3 dargestellt. Die Abstützvorrichtung 12, 14, 16 hat, ähnlich wie die Verriegelungsvorrichtung 11, 13, 15, einen zweiten Hebel 12, der an einem Ende an der am Rahmen 5 drehbar gestützten Welle 17 angebracht ist. Durch Drehen der Handhabe 18 wird die Welle 17 zusammen mit dem zweiten Hebel 12 gedreht. Der zweite Hebel 12 hat am anderen Ende eine Eingriffsvorrichtung 14, die mit einem Verriegelungsteil 16 am Rahmen 5 in Eingriff gelangt. Die zweite Eingriffsvorrichtung 14 im dargestellten Ausführungsbeispiel hat die Gestalt einer Ausnehmung, und der zweite Verriegelungsteil 16 hat die Gestalt eines mit der Ausnehmung korrespondierenden Vorsprungs, der von einer inneren, seitlichen Fläche des Rahmens 5 vorsteht.

Wenn die Verriegelungsvorrichtung 11, 13, 15 den Bandkörper 3 nicht verriegelt und der Bandkörpers 3 um die Achse 6 im Gegenuhrzeigesinn gedreht wird, erreicht der Bandkörper 3 die zweite Position bezüglich des Rahmens 5, d. h. eine Rüstposition. Die Abstützvorrichtung 12, 14, 16 stützt den Bandkörper 3 in der zweiten Position ab, wenn die Handhabe 18 so gedreht wird, dass die zweite Eingriffsvorrichtung 14 mit dem zweiten Verriegelungsteil 16 in Eingriff gelangt. Nun kann der Transportgurt 2 von dem Bandkörper 3 abgezogen werden. Darüber hinaus kann auch der Bandkörper 3 von der Achse 6 demontiert werden, wenn der Bandkörper 3 in der zweiten Position ist.

Die Antriebsvorrichtung 4 hat eine an dem Rahmen 5 drehbar gelagerte Walze 8, die über einen Motor drehend angetrieben wird. Die Walze 8 umschlingt den Transportgurt 2, wenn der Bandkörper 3 in der ersten Position angeordnet ist. Die Antriebsvorrichtung 4 ist getrennt von dem Bandkörper 3 ausgebildet, sodass der Bandkörper 3 ohne die Antriebsvorrichtung 4 drehbar ist. Der Motor wird mit elektrischem Strom betrieben, wobei die entsprechenden Kabel durch den Rahmen 5 und ein Zwischenrohrstück 9 zum Motor geführt sind. Auf diese Weise liegen die Kabel nicht frei, was zu einer verbesserten Hygiene beiträgt.

Die Demontage des Transportgurts 2 ausgehend von der im oberen Teil der Fig. 3 gezeigten Betriebsposition ist folgendermaßen: Zuerst wird die Handhabe 18 im Uhrzeigersinn gedreht, sodass die erste Eingriffsvorrichtung 13 von dem ersten Verriegelungsteil 15 außer Eingriff gelangt. Dann wird der Bandkörper 3 mit dem daran angeordneten Transportgurt 2 um die Achse 6 in die zweite Position gedreht. Dadurch löst sich der Transportgurt 2 von der Walze 8 und wird entspannt. Anschließend wird die Handhabe 18 im Gegenuhrzeigersinn gedreht, sodass die zweite Eingriffsvorrichtung 14 mit dem ersten Verriegelungsteil 16 in Eingriff gelangt. Dadurch wird der Bandkörper 3 stabil am Rahmen 5 abgestützt, wie dies im unteren Teil der Fig. 3 gezeigt ist. Der entspannte Transportgurt 2 ist nun frei zugänglich und wird von dem Bandkörper 3 abgezogen, ohne dass der Bandkörper 3 von dem Rahmen 5 demontiert wird. Der Transportgurt 2 kann nun gereinigt oder durch einen anderen Transportgurt 2 ausgetauscht werden. Gleichzeitig kann auch der Bandkörper 3 gereinigt werden. Die Montage des Transportgurts 2 erfolgt in umgekehrter Reihenfolge.

Die Fig. 4 zeigt in einem anderen Ausführungsbeispiel, dass das Transportband 1' zweispurig ausgeführt ist und mindestens zwei Transportgurte 2 aufweist. Vorzugsweise hat das Transportband 1' in diesem Fall mindestens zwei Bandkörper 3 mit je einem Transportgurt 2. Vorzugsweise umschlingen beide Transportgurte 2 in der ersten Position des Bandkörpers 3 eine gemeinsame Walze 8.

Der Schutzumfang beschränkt sich nicht auf die dargestellten Ausführungsbeispiele, sondern er umfasst weitere Änderungen und Abwandlungen, sofern diese innerhalb des durch die beigefügten Ansprüche definierten Umfangs fallen.

In den dargestellten Ausführungsbeispielen verläuft die Achse 6 quer zur Laufrichtung des Transportgurts 2 und ist einseitig an dem Rahmen 5 gestützt. In einer nicht dargestellten Abwandlung kann die Achse in Laufrichtung des Transportgurts 2 verlaufen. Dadurch wird der Bandkörper 3 nicht im Gegenuhrzeigersinn gedreht, wie dies in den Zeichnungen dargestellt ist, sondern der Bandkörper 3 wird längs gedreht, wobei die Achse dann in der Zeichenebene von links nach rechts verläuft. Wenn der Bandkörper gedreht wird, wird in analoger Blickrichtung wie in Fig. 3 die vordere Seite des Bandkörpers angehoben. Auch in diesem Fall kann der Transportgurt von dem Bandkörper abgezogen werden, ohne dass der Bandkörper von dem Rahmen demontiert werden muss.

In den dargestellten Ausführungsbeispielen hat die Antriebsvorrichtung 4 eine an dem Rahmen 5 drehbar gelagerte Walze 8, die über einen Motor drehend angetrieben wird. Alternativ kann die Antriebsvorrichtung 4 zwei an dem Rahmen 5 drehbar gelagerte Walzen 8 aufweisen, die über einen einzigen Motor drehend angetrieben werden. Der Transportgurt 2 umschlingt beide Walzen 8, wenn der Bandkörper 3 in der ersten Position angeordnet ist.

In den dargestellten Ausführungsbeispielen ist der Motor außerhalb der Walze 8 angeordnet. Alternativ kann der Motor in der Walze 8 integriert sein.

In den dargestellten Ausführungsbeispielen ist die Verriegelungsvorrichtung 11, 13, 15 vorgesehen. Alternativ kann die Verriegelung des Bandkörpers 3 an der ersten Position allein durch die Schwerkraft des Bandkörpers 3 bewirkt werden, so dass die Verriegelungsvorrichtung 11, 13, 15 weggelassen werden kann.

Die Erfindung ist nicht nur bei Schalenverschließmaschinen anwendbar, sondern auch bei anderen Verpackungsmaschinen wie zum Beispiel bei Tiefziehmaschinen oder Kammerbandmaschinen.

## Patentansprüche

1. Verpackungsmaschine mit einem Transportband (1), wobei das Transportband (1) Folgendes aufweist:
einen Transportgurt (2);
einen Bandkörper (3), um den der Transportgurt (2) gewickelt ist;
eine Antriebsvorrichtung (4), die den Transportgurt (2) um den Bandkörper (3) umlaufend antreibt; und
einen Rahmen (5), an dem eine Achse (6) gestützt ist, wobei der Bandkörper (3) um die Achse (6) so drehbar ist, dass der Transportgurt (2) von dem Bandkörper (3) abziehbar ist, ohne dass der Bandkörper (3) von dem Rahmen (5) demontiert ist,
wobei das Transportband (1) eine Verriegelungsvorrichtung (11, 13, 15) aufweist, die den Bandkörper (3) an einer ersten Position bezüglich des Rahmens (5) verriegelt, und
wobei der Bandkörper (3) zu einer zweiten Position bezüglich des Rahmens (5) um die Achse (6) drehbar ist, wenn die Verriegelungsvorrichtung (11, 13, 15) den Bandkörper (3) nicht verriegelt, und der Transportgurt (2) von dem Bandkörper (3) abziehbar ist, wenn der Bandkörper (3) in der zweiten Position ist, und
wobei das Transportband (1) eine Abstützvorrichtung (12, 14, 16) aufweist, über die sich der Bandkörper (3) in der zweiten Position am Rahmen (5) abstützt,
**dadurch gekennzeichnet, dass** die Verriegelungsvorrichtung (11, 13, 15) und die Abstützvorrichtung (12, 14, 16) mittels einer gemeinsamen Handhabe (18) bedienbar sind.

2. Verpackungsmaschine gemäß Anspruch 1, wobei die Achse (6) quer zur Laufrichtung des Transportgurts (2) verläuft und einseitig an dem Rahmen (5) gestützt ist.

3. Verpackungsmaschine gemäß Anspruch 1, wobei die Achse (6), um die der Bandkörper (3) drehbar ist, in Laufrichtung des Transportgurts (2) verläuft.

4. Verpackungsmaschine gemäß einem der vorherigen Ansprüche, wobei der Bandkörper (3) ohne die Antriebsvorrichtung (4) drehbar ist.

5. Verpackungsmaschine gemäß dem vorherigen Anspruch, wobei die Antriebsvorrichtung (4) eine an dem Rahmen (5) drehbar gelagerte Walze (8) aufweist, die über einen Motor drehend angetrieben wird, und der Transportgurt (2) die Walze (8) umschlingt, wenn der Bandkörper (3) in der ersten Position angeordnet ist.

6. Verpackungsmaschine gemäß einem der vorherigen Ansprüche, wobei die Antriebsvorrichtung (4) zwei an dem Rahmen (5) drehbar gelagerte Walzen (8) aufweist, die über einen einzigen Motor drehend angetrieben werden, und der Transportgurt (2) in der ersten Position die Walzen (8) umschlingt.

7. Verpackungsmaschine gemäß Anspruch 5 oder 6, wobei der Motor in der Walze (8) integriert ist.

8. Verpackungsmaschine gemäß einem der Ansprüche 5 bis 7, wobei Energieleitungen oder Kabel durch ein Zwischenrohrstück (9) zum Motor geführt sind.

9. Verpackungsmaschine gemäß einem der vorherigen Ansprüche, wobei der Bandkörper (3) von der Achse (6) demontierbar ist, wenn der Bandkörper (3) in der zweiten Position ist.

10. Verpackungsmaschine gemäß einem der vorherigen Ansprüche, wobei die Verriegelungsvorrichtung (11, 13, 15) und die Abstützvorrichtung (12, 14, 16) einen Hebel (11, 12) aufweisen, der an einem Ende an dem Bandkörper (3) drehbar angelenkt ist und über die Handhabe (18) gedreht werden kann, und der Hebel (11, 12) am anderen Ende eine Eingriffsvorrichtung (13, 14) aufweist, die mit einem Verriegelungsteil (15, 16) am Rahmen (5) in Eingriff gelangt.

11. Verpackungsmaschine gemäß einem der vorherigen Ansprüche, wobei das Transportband (1) zweispurig ausgeführt ist und mindestens zwei Transportgurte (2) aufweist.

12. Verpackungsmaschine gemäß einem der vorherigen Ansprüche, wobei das Transportband (1) mindestens zwei Bandkörper (3) mit je einem Transportgurt (2) aufweist, wobei beide Transportgurte (2) die Walze (8) gemeinsam umschlingen, wenn der Bandkörper (3) in der ersten Position angeordnet ist.

13. Verpackungsmaschine gemäß einem der vorherigen Ansprüche, wobei der Bandkörper (3) eine in Betriebsposition oben angeordnete ebene Fläche aufweist, die durch zwei parallele Seiten begrenzt ist, an denen der Transportgurt (2) umgelenkt wird, und die Achse (6) und die Antriebsvorrichtung (4) unter der Fläche angeordnet sind.

## Claims

1. A packaging machine with a belt conveyor (1), the belt conveyor (1) comprising the following:
a conveyor belt (2);
a conveyor body (3), around which the conveyor belt (2) is wound;
a drive device (4), which drives the conveyor belt (2) to revolve around the conveyor body (3); and
a frame (5), on which a pivot (6) is supported, the conveyor body (3) being capable of being turned about the pivot (6) in such a way that the conveyor belt (2) may be removed from the conveyor body (3), without the conveyor body (3) being demounted from the frame (5),
the belt conveyor (1) comprising a locking device (11, 13, 15), which locks the conveyor body (3) in a first position relative to the frame (5), and
the conveyor body (3) being capable of being turned about the pivot (6) to a second position relative to the frame (5) when the conveyor body (3) is not locked in place by the locking device (11, 13, 15), and the conveyor belt (2) being removable from the conveyor body (3) when the conveyor body (3) is in the second position, and
the belt conveyor (1) comprising a supporting device (12, 14, 16), by means of which the conveyor body (3) is supported on the frame (5) in the second position,
**characterised in that** the locking device (11, 13, 15) and the supporting device (12, 14, 16) can be operated by means of a common handle (18).

2. A packaging machine according to claim 1, wherein the pivot (6) extends transversely of the direction of travel of the conveyor belt (2) and is supported on one side on the frame (5).

3. A packaging machine according to claim 1, wherein the pivot (6) about which the conveyor body (3) may be turned extends in the direction of travel of the conveyor belt (2).

4. A packaging machine according to any one of the preceding claims, wherein the conveyor body (3) may be turned without the drive device (4).

5. A packaging machine according to the preceding claim,
wherein the drive device (4) comprises a roller (8) mounted rotatably on the frame (5), which roller is driven in rotation by means of a motor, and the conveyor belt (2) is wrapped round the roller (8) when the conveyor body (3) is arranged in the first position.

6. A packaging machine according to any one of the preceding claims, wherein the drive device (4) comprises two rollers (8) mounted rotatably on the frame (5), which rollers are driven in rotation by means of a single motor, and in the first position the conveyor belt (2) is wrapped around the rollers (8).

7. A packaging machine according to claim 5 or claim 6,
wherein the motor is incorporated in the roller (8).

8. A packaging machine according to any one of claims 5 to 7, wherein power lines or cables are guided to the motor through an intermediate tubular element (9).

9. A packaging machine according to any one of the preceding claims, wherein the conveyor body (3) can be demounted from the pivot (6) when the conveyor body (3) is in the second position.

10. A packaging machine according to any one of the preceding claims, wherein the locking device (11, 13, 15) and the supporting device (12, 14, 16) comprise a lever (11, 12), which is coupled rotatably at one end to the conveyor body (3) and may be turned by means of the handle (18), and the lever (11, 12) comprising an engaging device (13, 14) at the other end, which engaging device engages with a locking part (15, 16) on the frame (5).

11. A packaging machine according to any one of the preceding claims, wherein the belt conveyor (1) is of dual lane construction and comprises at least two conveyor belts (2).

12. A packaging machine according to any one of the preceding claims, wherein the belt conveyor (1) comprises at least two conveyor bodies (3) each with one conveyor belt (2), wherein both conveyor belts (2) are wrapped jointly around the roller (8) when the conveyor body (3) is arranged in the first position.

13. A packaging machine according to any one of the preceding claims, wherein the conveyor body (3) comprises a flat surface arranged at the top in the operating position,
which surface is defined by two parallel sides, at which the conveyor belt (2) is deflected, and the pivot (6) and the drive device (4) are arranged below the surface.

## Revendications

1. Machine d'emballage avec une bande de transport (1), dans laquelle la bande de transport (1) comprend :
une courroie de transport (2) ;
un corps de bande (3) autour duquel passe la courroie de transport (2) ;
un dispositif d'entraînement (4) qui entraîne la courroie de transport (2) de manière rotative autour du corps de bande (3) ; et
un châssis (5) sur lequel est supporté un axe (6), dans laquelle le corps de bande (3) peut tourner autour de l'axe (6) de telle sorte que la courroie de transport (2) peut être enlevée du corps de bande (3) sans démonter le corps de bande (3) du châssis (5),
dans laquelle la bande de transport (1) comporte un dispositif de verrouillage (11, 13, 15) qui verrouille le corps de bande (3) dans une première position par rapport au châssis (5), et
dans laquelle le corps de bande (3) peut tourner autour de l'axe (6) dans une deuxième position par rapport au châssis (5) lorsque le dispositif de verrouillage (11, 13,15) ne verrouille pas le corps de bande (3), et la courroie de transport (2) peut être enlevée du corps de bande (3) lorsque le corps de bande (3) se trouve dans la deuxième position, et
dans laquelle la bande de transport (1) comporte un dispositif de support (12, 14, 16) sur lequel le corps de bande (3) est posé dans la deuxième position par rapport au châssis (5),
**caractérisée en ce que** le dispositif de verrouillage (11, 13, 15) et le dispositif de support (12, 14, 18) peuvent être commandés à l'aide d'une poignée commune (18).

2. Machine d'emballage selon la revendication 1, dans laquelle l'axe (6) est perpendiculaire à la direction de déplacement de la courroie de transport (2) et est supporté d'un seul côté sur le châssis (5),

3. Machine d'emballage selon la revendication 1, dans laquelle l'axe (8) autour duquel le corps de bande (3) peut tourner est orienté selon la direction de déplacement de la courroie de transport (2).

4. Machine d'emballage selon l'une des revendications précédentes, dans laquelle le corps de bande (3) peut tourner sans le dispositif d'entraînement (4).

5. Machine d'emballage selon la revendication précédente, dans laquelle le dispositif d'entraînement (4) comporte un rouleau (8) monté de façon rotative sur le châssis (5) et entraîné en rotation par un moteur, et dans laquelle la courroie de transport (2) s'enroule sur le rouleau (8) lorsque le corps de bande (3) est agencé dans la première position.

6. Machine d'emballage selon l'une des revendications précédentes, dans laquelle le dispositif d'entraînement (4) comporte deux rouleaux (8) montés de façon rotative sur le châssis (5) qui sont entraînés en rotation par un même moteur, et la courroie de transport (2) est enroulée sur le rouleau (8) dans la première position.

7. Machine d'emballage selon la revendication 5 ou 6, dans laquelle le moteur est intégré dans le rouleau (8).

8. Machine d'emballage selon l'une des revendications 5 à 7, dans laquelle des lignes d'alimentation en énergie ou des câbles sont conduits à travers une pièce tubulaire intermédiaire (9) jusqu'au moteur.

9. Machine d'emballage selon l'une des revendications précédentes, dans laquelle le corps de bande (3) peut être démonté de l'axe (6) lorsque le corps de bande (3) se trouve dans la deuxième position.

10. Machine d'emballage selon l'une des revendications précédentes, dans laquelle le dispositif de verrouillage (11, 13, 15) et le dispositif de support (12, 14, 18) comportent un levier (11, 12) qui est connecté de manière rotative à une extrémité du corps de bande (3) et peut être tourné au moyen de la poignée (18), et le levier (11, 12) comporte un dispositif d'engagement (13, 14) à l'autre extrémité qui s'engage avec un élément de verrouillage (15, 16) du châssis (5).

11. Machine d'emballage selon l'une des revendications précédentes, dans laquelle la bande de transport (1) comporte deux voies et au moins deux courroies de transport (2).

12. Machine d'emballage selon l'une des revendications précédentes, dans laquelle la bande de transport (1) comporte au moins deux corps de bande (3) portant chacun une courroie de transport (2), dans laquelle les deux courroies de transport (2) s'enroulent ensemble sur le rouleau (8) lorsque les corps de bande (3) sont agencés dans la première position.

13. Machine d'emballage selon l'une des revendications précédentes, dans laquelle le corps de bande (3) comporte une surface plane agencée en haut dans la position de service et limitée par deux côtés parallèles autour desquels la courroie de transport (2) est enroulée, et dans laquelle l'axe (6) et le dispositif d'entraînement (4) sont agencés sous ladite surface.
